(19) Europäisches Patentamt
European Patent Office
Office européen des brevets

(11) Veröffentlichungsnummer: **0 067 115**
**A1**

(12) # EUROPÄISCHE PATENTANMELDUNG

(21) Anmeldenummer: **82730033.6**

(51) Int. Cl.³: **B 01 D 46/52**

(22) Anmeldetag: **15.03.82**

(30) Priorität: **16.03.81 DE 3110733**

(43) Veröffentlichungstag der Anmeldung: **15.12.82**
**Patentblatt 82/50**

(84) Benannte Vertragsstaaten: **FR GB NL**

(71) Anmelder: **DELBAG-LUFTFILTER GmbH, Holzhauser Strasse 159, D-1000 Berlin 27 (DE)**

(72) Erfinder: **Neumann, Gerhard Max, Lentzeallee 93, D-1000 Berlin 33 (DE)**

(74) Vertreter: **Pfenning, Joachim, PATENTANWÄLTE PFENNING MAAS MEINIG SPOTT Kurfürstendamm 170, D-1000 Berlin 15 (DE)**

(54) **Kompaktes Universal-Grossflächenfiltersystem nach dem Baukastenprinzip zur Luftreinigung.**

(57) Die Anmeldung betrifft einen selbstabdichtenden, auswechselbaren, grossflächigen Filtereinsatz (1) für einseitig oder beidseitig mit Flanschabbiegungen versehene Aufnahmerahmen zum Einbau in Wände, Decken oder dergleichen. Der Aufnahmerahmen besitzt ein als Stütze dienendes Gitternetz und ist ein- oder beidseitig mit nach aussen angeordneten, der Versteifung dienenden Flanschabbiegungen versehen zur austauschbaren Aufnahme eines mit zwei Zugschlaufen (10) versehenen, paketartigen beiderseits gefalteten Filtereinsatzes. Der Filtereinsatz besitzt eine äussere umlaufende U-förmige Gitternetzbandage (6), die beiderseitig mit nachgiebigem flauschigen Faservliesstoff (7, 8) beklebt ist derart, dass der Filtereinsatz in den Aufnahmerahmen unter Abdichtung einschiebbar und fixierbar ist und von einem aus Draht bestehenden Federkreuz in der Arbeitslage beiderseits mit dem Luftstrom beaufschlagbar gehalten ist. Der Filtereinsatz ist als selbstdichtendes kompaktes Wegwerfteil ausgebildet und ist ein wirksames Grossflächenfilter, das kostengünstig auf einfache Weise als Massenware herstellbar ist, ohne dass kostenintensives Rahmen-, Einfass- und Dichtungsmaterial und auch kostenintensive Anpressmittel erforderlich sind.

10
5
3
2
6
9
7
9
8
10
4
1

EP 0 067 115 A1

0067115

Kompaktes Universal-Großflächenfiltersystem nach dem Baukastenprinzip zur Luftreinigung

Die Erfindung betrifft selbstabdichtende, auswechselbare, großflächige Kompaktfiltereinsätze passend zu einseitig oder beidseitig mit Flanschabbiegungen versehene Aufnahmerahmen zum unmittelbaren Einbau in Wände, Decken oder Gehäuse oder zum wahlweisen Einbau in vorhandene Einbaurahmen mit Anpreßvorrichtungen.

Auswechsèlbare Filtereinsätze in den verschiedensten Formen und die hierzu notwendigen Aufnahmerahmen sind seit langer Zeit Stand der Filtertechnik. Solche Filter mit großen Aktivflächen sind erforderlich, um große Volumenströme durch möglichst kleine Ein- und Austrittsquerschnitte zu leiten, wobei der vom Luftstrom mitgeführte Staub mit ausreichender Wirkung zurückzuhalten ist.

Filtereinsätze dieser Art bestehen in der Regel - je nach Einsatzgebiet und Qualitätsanforderung - entweder aus hochwertigen mit Holz eingerahmten und miteinander vergossenen Filterelementen aus zickzack gefalteten großflächig angeordneten Hochleistungspapieren oder aus konisch geformten mehrtaschig angeordneten Luftfiltersäcken, deren Filterstoffe wahlweise aus Glaswolle, Faserstoffen, Kunststoffwolle oder aus verschiedenen Faservlieslagen bestehen.

Für einige dieser Filtereinsätze sind zur Distanzhalterung der Filterfalten zusätzliche Aussteifungselemente in Form von Drahtkörben erforderlich. Die Falten anderer Filterelemente werden durch die besondere Geometrie unterschiedlich geformter Abstandshalter gegenseitig auf Distanz gehalten. Hierzu zählen u.a. gewellte Aluminium- oder Kunststoffolien oder entsprechende Kammeinlagen. Häufig wird der Filterstoff in seinen Falten auch durch Kunststoffäden oder durch die Faltenverformung gegenseitig von selbst separiert.

Alle aufgezählten Filter haben ein gemeinsames Merkmal, indem sie jeweils immer aus einem Filtereinsatz und aus einem Einfaßrahmen bestehen, wobei der letztere - je nach Bedarf - aus Holz, Kunststoff oder Metallblech hergestellt ist. Filtereinsätze mit solchen Einfaßrahmen werden entweder in spezielle darauf abgestimmte Aufnahmerahmen oder in entsprechende Gehäuse mit Spannvorrichtungen dichtend eingespannt.

Diese Filterbauarten werden in der Minderzahl als wiederverwendbare Elemente verwandt. Die Mehrzahl davon sind sogenannte Wegwerffilterkonzeptionen. Solche Filter werden in der Praxis nach einmaligem Gebrauch bzw. nach erfolgter Staubsättigung dem Müllversatz beigegeben. Handelt es sich um aufwendige Einfassungen, zum Beispiel um allseits abdichtende Rahmen aus Pappe-, Holz-, Kunststoff- oder Metallteile, so wird selbstverständlich nicht nur der mit Staub gesättigte Filterstoff mit weggeworfen, sondern auch der damit fest verbundene relativ kostenaufwendige Einfaß- oder Halterahmen einschließlich der Abdeckgitter.

Der Umstand, daß die Einfassung der gefalteten Filterstoffe in Form eines allseits abdichtenden Rahmens noch zusätzlich in einen anderen von selbst abdichtenden Einbaurahmen hineingeklemmt werden muß unter Zuhilfenahme von hierfür besonders geeigneten Spannvorrichtungen zur Vermeidung von Leckagen, erschwert die Handhabung beim Filterwechsel noch mehr.

Die Kritik am Stand der Technik richtet sich in der Hauptsache gegen drei Unzulänglichkeiten. Zunächst wird mit viel meistens handwerklicher Mühe der gefaltete Einsatz aus dem Filterstoff in einen Einfaßrahmen dichtend eingegossen, angeklebt oder eingeklemmt. Dieser Einfaßrahmen muß stabil hergestellt sein, um die weichen Filterstoffe abgedichtet gegen den Druck des Luftstromes zu halten. Weiterhin muß dieser Einfaßrahmen so gestaltet sein, daß ein weiterer in Wände oder Gehäuse fest eingebauter mit Spannvorrichtungen versehener Halterahmen als dichtende und jederzeit wieder lösbare Aufnahme fortlaufend benutzbar ist.

Das bedeutet, daß zur Zeit des allgemeinen Recyclingdenkens verbunden mit der Idee der immer mehr notwendig werdenden Energie- und Materialeinsparung, wertvolles und zum größten Teil noch funktionsfähiges Holz-, Blech- oder Vergußmaterial dem Müll beigegeben wird, das im Prinzip mit der Staubsättigung und sonstigen Leistung des Filterstoffes in keinem unmittelbaren Zusammenhang steht.

Die nächste Betrachtung richtet sich auf den Zweitrahmen,der notwendig ist, um den Einfaßrahmen mit dem Filter dichtend mit entsprechenden Spannvorrichtungen in einer eingebauten Anlage aufzunehmen. Ein solcher Aufnahmerahmen muß Dichtungen und Anpreßvorrichtungen aufweisen, um seinerseits wiederum in einer Anlage leckfrei abgedichtet aneinandergeschraubt die Voraussetzung dafür zu schaffen, daß der Filtereinsatz mit der Einfassung darin jederzeit abgedichtet einsetzbar oder auswechselbar ist.

Dieser zusätzlich erforderliche Aufnahmerahmen mit seinen zumeist vierseitig angeordneten Spannvorrichtungen verbunden mit dem zum Teil zeitraubenden Handling des Filteraustausches ist ein weiteres Kriterium, das die bisher geschilderten Umstände in keiner Weise günstig beeinflußt oder gar vereinfacht.

Zur Vermeidung von Nachteilen,die hieraus entstehen, sind aus der Druckschrift DE-OS 15 07 784 und aus der DE-PS 903 576 speziell konstruierte Filtereinsätze mit flexiblen Flanschrändern bekanntgeworden, die auf die einseitigen Flanschen von Aufnahmerahmen dichtend aufgelegt oder mit Klebefolien stirnseitig abdichtend zugeklebt werden. Nach dem Abreißen der Klebefolie werden die Filtereinsätze aus den Aufnahmerahmen entnommen und nach erfolgtem Gebrauch weggeworfen. Die Einfassungen bestehen entweder aus Vergußmassen oder aus Kunstharzen.

Die US-PS 2 907 407 geht zum Beispiel von herausnehmbaren Filtereinsätzen aus, deren Außenseiten u.a. mit angeklebten Wellpappestreifen als Einfassung umrandet sind. Der Dichtverband wird durch Anpressung über die hohen Kanten der Pappestreifen erzielt. Die Einfassung hierfür ist sozusagen der Filter-Halterahmen, der wiederum in einen anderen Rahmen eingebettet werden muß.

Schließlich geht die US-PS 3 258 900 in einer anderen Version noch davon aus, daß der Filtereinsatz aus einem zusammendrückbaren Zickzack-Faltenpaket aus Faservliesstoff besteht, der mit beidseitig eingelegten flexiblen und luftdurchlässigen Abstandshaltereinlagen,zum Beispiel Faservliesen,

versehen ist, und außen von mehreren Haltebändern während des Transports in zusammengepreßter Form gehalten wird. Nach dem Einlegen dieser elastischen Filtereinsätze in den Aufnahmerahmen werden die Haltebänder durchgetrennt. Dabei federt der expansionsfähige Filtereinsatz im Aufnahmerahmen auseinander und dichtet sich so im Aufnahmerahmen, der mit einem durchbrochenen Scharnierdeckel versehen ist, von selbst ab. Die Druckschrift DE-OS 21 41 777 beschreibt noch diverse Abstandshalter für Filterelemente, die aber inzwischen vom Stand der Technik überholt sind.

Die zuletzt aufgezählten Konstruktionen haben die Nachteile, daß Filtereinsätze in dieser Art entweder relativ aufwendige Außeneinfassungen durch Kunstharz benötigen oder für höherwertige Großflächenfilter weniger taugliche Einfaßrahmen, Abstandshalterungen oder Abdichtungsmittel gegen den Aufnahmerahmen besitzen. Für eine beiderseitige Beaufschlagung mit dem Luftstrom sind die meisten Konstruktionen ohnehin nicht geeignet. Die nur mit geringen Luftdrucken belastbare Abklebung mittels Haftkleber-Dichtfolien an den zusammenstoßenden Filterflanschen setzt stets fettfreie Rahmenflächen voraus und stellt schon von daher beim Filterwechsel einen Unsicherheitsfaktor dar. Das flexible Filterpaket nach der US-PS 3 258 900 mit den Haltebändern, dürfte schon aufgrund der porösen mitgefalteteten Distanzhalterschichten eine hohe energieverbrauchende Druckdifferenz aufweisen, abgesehen von der Tatsache, daß der Staub nur schwerlich in die Falten des eigentlichen Filterstoffes eindringen kann. Die Staubspeicherfähigkeit ist gering, weil die meisten Staubpartikel zwangsläufig auf der stirnseitigen Abstandshalter- und Filteroberfläche liegen bleiben. Außerdem lassen sich die beschriebenen Aufnahmerahmen nur eingeschränkt als direkte Wandeinbaurahmen benutzen und sind eher für der Gehäuseeinbau vorgesehen. Die bisher in verschiedenen Versionen vorveröffentlichten Abstandhalter sind in strömungstechnischer Hinsicht häufig ungünstig gestaltet und **decken zuviel** filternde Fläche vom Filterpapier oder vom Faservlies des Filtereinsatzes ab. Mitunter handelt es sich dabei in ungünstigen Fällen um Flächenverluste von 20 bis 25 %. Das kostenaufwendige Filtermaterial ist an diesen Abdeckstellen nicht mehr mit der Staubluft belastbar. Die angesprochenen Sack- oder Taschenfilter für den gleichen Einsatzzweck sind zu labil und so raumgreifend, daß in vielen Bereichen eine Anwendung entfällt.

Der Erfindungsaufgabe liegt zugrunde, die aufgezählten Unzulänglichkeiten der im einzelnen beschriebenen Filtereinheiten weitgehend zu vermeiden und dabei kostenintensives Rahmen-, Einfaß- und Dichtungsmaterial einschließlich der Anpreßmittel einzusparen. Dabei soll der selbstabdichtende Filtereinsatz nicht nur als kompaktes müllgerechtes Wegwerfteil konzipiert sein, sondern auch als ein gut wirksames Großflächenfilter mit einem

BAD ORIGINAL

dazu gehörenden wiederverwendbaren gleichzeitigen Aufnahme- und Wandeinbaurahmen noch kostengünstig schnell und leicht als Massenware herstellbar sein. Gleichzeitig sollen zur Faltenseparierung des Filtereinsatzes bevorzugt Abstandshalter angewendet werden, deren Abdeckflächen 1 bis 5 % am Filterstoff nicht überschreiten.

Alle funktionellen noch brauchbaren wertvollen Konstruktionsteile, die nur vorübergehend dem eigentlichen Staubabscheidungsvorgang dienlich sind bis das Filter gesättigt ist und den Wegwerfzeitpunkt erreicht hat, sollen gemäß der Erfindungsaufgabe nicht mehr wie bisher weggeworfen werden. Dazu gehört in erster Linie der Aufnahmerahmen selbst und der Wegfall von bisher erforderlichen Verguß- oder Kunststoffmassen zur Bildung von Dichtungen und Einfassungen oder Abdichtungsflanschen. Weiterhin besteht die Aufgabe noch in der Bildung eines nicht wegwerfbaren Aufnahmerahmens zur Aufnahme von verschiedenartigen Filtereinsätzen, der einerseits gleichzeitig als selbstarretierender Wand- und Deckeneinbaurahmen unter Weglassung von Spannvorrichtungen benutzbar ist und der bei Bedarf auch als Nachrüsteinheit in vorhandene Wandeinbaurahmen mit handelsüblichen Anpreßvorrichtungen luftabgedichtet eingesetzt werden kann.

Diese Aufgabe wird nach der Erfindung zunächst dadurch gelöst, daß der für den erfindungsgemäßen Filtereinsatz passende vorderseitig offene und rückseitig mit einem nach innen gebogenen 15 bis 20 mm breiten Flansch und mit einem als Stütze dienenden Gitternetz abgedeckte Filteraufnahmerahmen wahlweise mit ein- oder beidseitigen nach außen angeordneten kastenartigen oder U-förmigen Flanschabbiegungen versehen ist, wodurch dieser gleichzeitig als selbstarretierender Wand-, Decken- oder Gehäuseeinbaurahmen so ausgebildet ist, daß ein austauschbarer mit zwei Zugschlaufen versehener paketartig vorbereiteter nicht flexibler großflächiger gefalteter, beidseitig keilförmig distanzierter Filtereinsatz darin elastisch eingebettet werden kann mittels einer außen um den Filtereinsatz herum umlaufenden stramm angelegten U-förmigen Gitternetzbandage, die beidseitig mit einem nachgiebigen flauschigen Faservliesstoff beklebt ist, womit der Filtereinsatz in den Aufnahmerahmen gleitend einschiebbar und gleichzeitig luftabdichtend fixierbar ist und von einem Klemm- oder biegsamen Federdrahtkreuz in dieser Arbeitslage bedarfsweise beidseitig mit dem Luftstrom beaufschlagbar gehalten wird.

Eine weitere Lösung der Erfindung besteht darin, daß der außen flexibel und selbstabdichtend bandagierte Filtereinsatz aus zickzack gefalteten flauschig weichen Vliesstoffen oder aus feinfaserigen Hartvliesen besteht, die wahlweise aus Naturfaser-, Kunststoff- oder Glasfasergemischen gebildet sind, während die Filterfalten mit abwechselnd beidseitig eingeschobenen keilförmigen sich gegenseitig abstützenden Abstandshaltern versehen sind, die wahlweise aus steif verformten Maschendraht oder aus stabilisierten Streckmetalkeilen gegebenenfalls aber auch aus einem dünnen harten stark durchbrochenen Aluminiummaterial oder Kunststoff bestehen, die eine gewellte oder eine andere gegenseitig sich abstützende Keilform haben, welche mit einem Abmaß auf einer Seite von 8 bis 16 mm und auf der anderen Seite von 3,0 bis 5 mm versehen sind, wobei deren wahlweise Längen jeweils zwischen 130 und 360 mm liegen.

Ein weiteres Ausführungsbeispiel der Erfindung besteht darin, daß die flexible Gitternetzbandage zur umlaufenden und nach innen und außen abdichtende Einfassung des Filtereinsatzes wahlweise aus einem Metallgewebe, Streckmetall- oder Drahtgitter oder aus einem anderen stark durchbrochenen hart verformten Kunststoffstreifen besteht, der beidseitig etwa 5 bis 6 mm doppelt gefalzt oder um 180° umgelegt und U-förmig so ausgeformt ist, daß die den Filtereinsatz staub- und reinluftseitig übergreifenden abgebogenen rechtwinkligen Ränder beidseitig etwa ein Maß von 25 bis 50 mm aufweisen, während der lange gerade Schenkel mit den hierauf beidseitig aufgeklebten flauschigen Faservliesen die Höhe des jeweiligen wahlweisen Filtereinsatzes von > 130 bis 150 mm oder von > 260 bis 360 mm möglichst nicht überschreitet.

Zur Lösung der Erfindung gehört noch, daß der zickzackförmig gefaltete und durch stark luftdurchlässige Keile distanzierte Filtereinsatz

je nach Wahl entweder die Höhenabmaße von 80 bis 150 mm oder von >270 bis >450 mm besitzt bei einem wahlweisen quadratischen Außenmaß von 530 bis 550 mm oder von 260 bis 275 mm x 530 bis 550 mm, wobei unmittelbar an der elastischen Gitternetzbandage mindestens an je zwei Seiten des Filtereinsatzes 20 mm breite textile Zugschlaufen für den Fingergriff angeordnet sind.

Erfindungswesentlich ist in diesem Zusammenhang noch, daß der Aufnahmerahmen für den Filtereinsatz an der offenen Einschubseite einen doppelt nach außen angebogenen U-förmigen, nach innen mit einer Gleit- oder Führungsschräge versehenen kastenartigen Flanschansatz von 20 bis 25 mm Höhe und einer Breite von 20 bis 38 mm aufweist, wobei der an der unteren Rahmenseite nach innen rechtwinklig angebogene Flanschrand die Dichtungsanlage für den eingeschobenen Filtereinsatz darstellt und der übrigbleibende Zwischenraum der Rahmenöffnung mit einem weitmaschigen Drahtgitternetz oder Streckmetallgitter stationär abgedeckt ist.

Zur Erfüllung einer weiteren Forderung gemäß der Erfindungsaufgabenstellung gehört noch, daß der Filtereinsatz-Aufnahmerahmen ein quadratisches vorzugsweieses Innenmaß von 530 bis 550 mm oder ein rechteckiges Maß von 260 bis 275 x 530 bis 550 mm aufweist, wobei das obere oder untere Flanschaußenmaß bevorzugt entweder 610 x 610 mm oder 590 x 590 mm oder 285 bis 305 x 590 bis 610 mm ist, während die Einbaurahmentiefen in den Maßen etwa zwischen 150 und 450 mm liegen.

Ein weiteres Ausführungsbeispiel der Erfindung besteht darin, daß der ober- und unterseitig mit je einer kastenartigen Flanschabbiegung versehene Aufnahmerahmen jeweils am unteren Flansch, der 12 bis 15 mm breit nach innen gebogen ist, das U-förmige Kastenprofil dadurch erhält, indem dieses darauf wahlweise aufgepunktet oder fest aufgenietet ist.

Die Erfindung ist noch dadurch gekennzeichnet, daß der obere aus einem Stück angebogene nach innen abgeschrägte U-förmige Kastenflansch jeweils in der Mitte des Rahmens und der Schräge an allen vier Rahmenseiten jeweils eine Bohrung aufweist, die über Steckbuchsen mit dem äußeren Flanschrand dichtend jeweils in Verbindung stehen und zur Aufnahme eines vierteiligen Federdrahtkreuzes aus 5 bis 7 mm starken Draht dienen, welches aus zur Mitte hin etwas nach innen durchgewölbten Drahtbügeln gebildet wird, die jeweils an ihren Enden fest miteinander verbunden sind, während die Steckbuchsen im Rahmen gleichzeitig zwecks einer festen Rahmenverbindung untereinander zum Beispiel mit Kerbnägeln oder Zylinderstiften dauerhaft verstiftet werden können.

Im weiteren ist die Erfindung noch dadurch bestimmt, daß insbesondere die mit den kastenartigen Doppelflansch versehenen Aufnahmerahmen und die darin eingelegten Filtereinsätze zum Beispiel in den Außenmaßen 610 x 610 oder 610 x 305 mm zwecks Bildung einer von beiden Seiten beaufschlagten Wandfilteranlage nach baukastensystemartiger Über- und Nebeneinanderschichtung der Einbaurahmen zum Beispiel mit elastischen selbstklebenden Schaumstoffbanddichtungsstreifen 6 x 25 mm jeweils in den umlaufenden Flanschbereichen abgedichtet und von je zwei abwechselnd spiegelbildlich angeordneten ZET-förmigen Halte- bzw. Blechklammern an jeder Rahmenseite gegeneinander gehalten werden, wobei gegebenenfalls eine zusätzliche Verschraubung mit Schneidschrauben gegen die Rahmenflanschen und den umlaufenden Winkelflansch oder T-Stahlflansch über die Klammern diese Schnappverbindung noch unterstützt, während Zusatzaussteifungen bestehend aus U-Profilen bzw. T-Profilen oder Hutprofilen die einseitig mit kastenartigem Flansch ausgestatteten Aufnahmerahmen außerdem noch stabilisieren.

Ein weiteres Merkmal der Erfindung besteht darin, daß der erfindungsgemäße Filtereinsatz wahlweise sowohl aus scharf gefaltetem schwerentflammbaren Filterpapier, Faservliesen, Schaumstoff, feinfaseriger Watte, Filz oder aus trockener oder mit Staubbindemittel benetzter Faserwolle in Höhen von 130 bis 460 mm hergestellt ist, deren Faltenzwischenräume zwischen 8 und 16 mm liegen und wobei die staubabscheidenden Filteroberflächen im Speicher- und Niederschlagsbereich groß und in den Porenöffnungen möglichst gering sind. wobei die Elementarfasern dieser Filterstoffe vorzugsweise eine gewendelte oder multifile Faserstruktur mit geringer Faserdicke und Stapellängen vorzugsweise größer als 3 mm aufweisen, die mit geringem Bindemittelanteil in mehreren Schichten über- oder miteinander regellos vernetzt sind und dabei die diversen Schichtdicken von < 4,5 bis 12 mm nicht überschreiten, wobei die zickzackartig gefalteten Flächen zwischen 6 und 10 Quadratmeter und bei papierartigen dünneren Filtermaterialien von 1 bis 2,5 mm Dicke die Flächen zwischen 15 und 18 Quadratmetern pro Filtereinsatz liegen.

Ein anderes Erfindungsbeispiel ist noch dadurch gegeben, daß quer zur Luftstromrichtung zick6 zackartig geformte Abstandshalterkeile für gefaltete Filtereinsätze angewendet werden, die aus einem 0,5 bis 0,7 mm dicken geschweißten Zinkdrahtgitter bestehen, deren Maschenweiten ~12,5 x 25 mm oder ~ 30 x 30 mm groß sind oder aus 0,3 bis 0,5 mm dicker Streckmetallfolie bestehen, deren Maschenweiten und Längen zwischen 15 und 30 mm bei einer Stegbreite von 1 mm liegen und deren zickzackförmige Wellungen mit scharfen oder gebrochenen Kanten sich zum Keilende hin unter Beibehaltung gleichbleibender Anstellwinkel allmählich von 10 oder 20 mm ausgehend auf 3 bis 6 mm konisch verkleinern, wobei unabhängig von der Keilbreite die Keillängen jeweils zwischen 270 und 380 mm oder zwischen 130 und 265 mm liegen.

Ein weiteres Ausführungsbeispiel der Erfindung ist dadurch gekennzeichnet, daß verschiedenartig ausgebildete längs zur Verformungsachse angeströmte Abstandshalter für gefaltete Filtereinsätze angewendet werden, die wahlweise aus tiefgezogenen hitzebeständigen Kunststoffolien oder aus Tiefziehwerkstoff bzw. Alufolien bestehen, die eine zickzackförmige Wellenform haben oder spitz auslaufende pyramiden- oder kreisförmige Ausbuchtungen aufweisen, die rechts oder links von der Folienmitte jeweils abwechselnd herausgezogen sind und zum Abstandshalterende hin in der Höhe entweder parallel zur welligen Keilform längs verlaufend flacher werden oder sich als einzeln ausgebildete Warzen oder Pyramidenkästen von 10 bis 20 mm auf 3 bis 6 mm allmählich auf beiden Seiten zum Keilende hin verkleinern.

Eine weitere Abwandlung des Erfindungsbeispiels besteht noch darin, daß ein Alugitter oder ein verzinktes rechteckiges Drahtgitter oder eine verzinkte bzw. verzinnte Streckmetallgitterfolie mit Maschen zwischen 15 und 30 mm zur Abstandshalterung von gefalteten Filtereinsätzen so ausgebildet ist, daß jeweils in Abständen zwischen 40 und 60 mm parallel zur waagerechten Über- und Unterkante der Keilformkontur streifenförmig verlaufende Einknickungen zur gegenseitigen Abstützung eingearbeitet sind, die sich von 10 oder 20 mm ausgehend auf 3 bis 6 mm zum Keilende hin gleichmäßig verkleinern.

Eine andere Variante des Erfindungsgedankens besteht noch darin, daß Abstandshalter für gefaltete Filtereinsätze aus einer dünnen tiefziehbaren Folie hergestellt sind, bei der versetzt zueinander angeordnete abwechselnd rechts und links von der Folienmitte vorstehende kreisrunde Kegelspitzen mit gleichbleibenden Durchmessern herausgezogen sind, die sich in Keilform zum Ende hin beidseitig von 10 oder 20 mm ausgehend auf 3 bis 6 mm gleichmäßig verkleinern.

Eine weitere Ausweitung des Erfindungsgedankens besteht schließlich noch darin, daß die Filtereinsätze zur besseren Rahmeneinführung außen etwas konisch gehalten sind, wobei die allseitig umlaufende Schrägstellung der Gitternetzbandage mit den Dichtungen von der Zugschlaufenseite her $1^{o}$ bis $2^{o}$ nicht überschreitet, was durch etwas eingeknickte oder konisch umgefalzte Ecken am Gitternetz erreicht wird.

Ein Ausführungsbeispiel der Erfindung ist in den Zeichnungen dargestellt und wird im folgenden näher beschrieben.

Fig. 1 zeigt einen kompletten auseinander geklappten Filtereinsatz mit den verschiedenen konstruktiven Einzelheiten.

Fig. 2 zeigt einen Filtereinsatz mit dem Aufnahmerahmen und dem Klemmkreuz zum Verschließen des Filters. Der Rahmen ist für diesen Fall nur einseitig mit einem Flanschansatz ausgerüstet. Im Hintergrund ist strichpunktiert ein vorhandener Wandeinbaurahmen für Ausnahmefälle angedeutet, worin dieses Filtersystem gegebenenfalls abgedichtet und eingespannt angeordnet werden kann.

Fig. 3 stellt einen Schnitt durch das Filtersystem dar, um den Konturenverlauf der Einzelheiten zu verdeutlichen. Der Einbaurahmen hat in diesem Falle nur einen einseitigen Flansch mit Einführungsschräge.

Fig. 4 zeigt einen Schnitt durch eine Einbaurahmeneinzelheit mit doppelt angeordneten kastenartigen Flanschen, wobei der untere Flansch zusätzlich befestigt ist.

Fig. 5 ist eine Wandeinbauanlage in der Seitenansicht innerhalb eines Mauerwerks, woraus zu ersehen ist, daß aus den Einbaurahmen selbst baukastenartige Wände gebildet werden können, die mit Federklammern verriegelbar oder mit aussteifenden Profilen stabilisierbar sind.

Fig. 6 zeigt eine Wandeinbaueinzelheit mit einer dauerelastischen Rahmenabdichtung zum Beispiel Moosgummi o.ä. und die beispielsweisen

BAD ORIGINAL

Anordnungen von verschiedenen Profilen mit der Verschraubung am Rahmen, falls solche Aussteifungen bei großen Wandanlagen erforderlich sein sollten.

Fig. 7 ist die Vorderansicht einer Wandeinbauanlage dieses Filtersystems in Luftstromrichtung. Gleichzeitig soll hiermit die Anordnung der Federklammern und die der Klemmkreuze sowie mit Hilfe von Schrauben die Anbringung von aussteifenden Profilen und einem zusätzlichen umlaufenden Winkelstahl-Einbaurahmen angedeutet werden.

Fig.8 ist die Darstellung eines quer zur Luftstromrichtung gefalteten keilförmigen Abstandshalters für den erfindungsgemäßen Filtereinsatz aus einem verzinkten Dünn-Drahtgitter oder aus einer rostfreien Streckmetallfolie mit der geringsten Abdeckung von Filtermaterial, die in dieser Form bisher bekannt ist.

Fig.9 ist die Seitenansicht von Fig. 8 und zeigt das Keilende eines Streckmetall- oder Drahtgitterabstandshalters.

Fig. 10 ist eine Draufsicht auf die Fig. 8 und soll die quer zur Luftströmung verlaufende keilförmige Abstandshalterzickzackform des dünnen Drahtgitters oder der Streckmetallfolie darstellen und die Anordnung der damit zu separierenden Filterschicht mit der geringen Abdeckfläche am Filterpapier verdeutlichen.

Fig. 11 zeigt die Vorderansicht eines preßverformten oder tiefgezogenen Abstandshalters für den Filtereinsatz aus einer Folie oder einem Hartpapier mit einer längs oder parallel zur Luftstromrichtung verlaufenden Zickzackfaltung, die mit spitzen Falten am Keilanfang beginnt und immer flacher und kleiner in der Faltung wird bis das Keilende erreicht ist. Die strichpunktiert eingezeichneten Faltlinien sollen die allmählich abnehmenden Falthöhen zum Keilende hin demonstrieren. Die Folie kann im Gegensatz zur Darstellung auch stark durchbrochen sein.

Fig. 12 ist eine Seitenansicht der Fig. 11 und zeigt die vom Keilanfang bis zum Keilende hin veränderte Faltstruktur parallel zur Luftströmung verlaufend.

Fig. 13 ist eine Draufsicht auf den Abstandshalter gemäß Fig. 11 zur Demonstration der Keilform und der beabsichtigten Distanzierung der angedeuteten herumgefalteten Filterschicht.

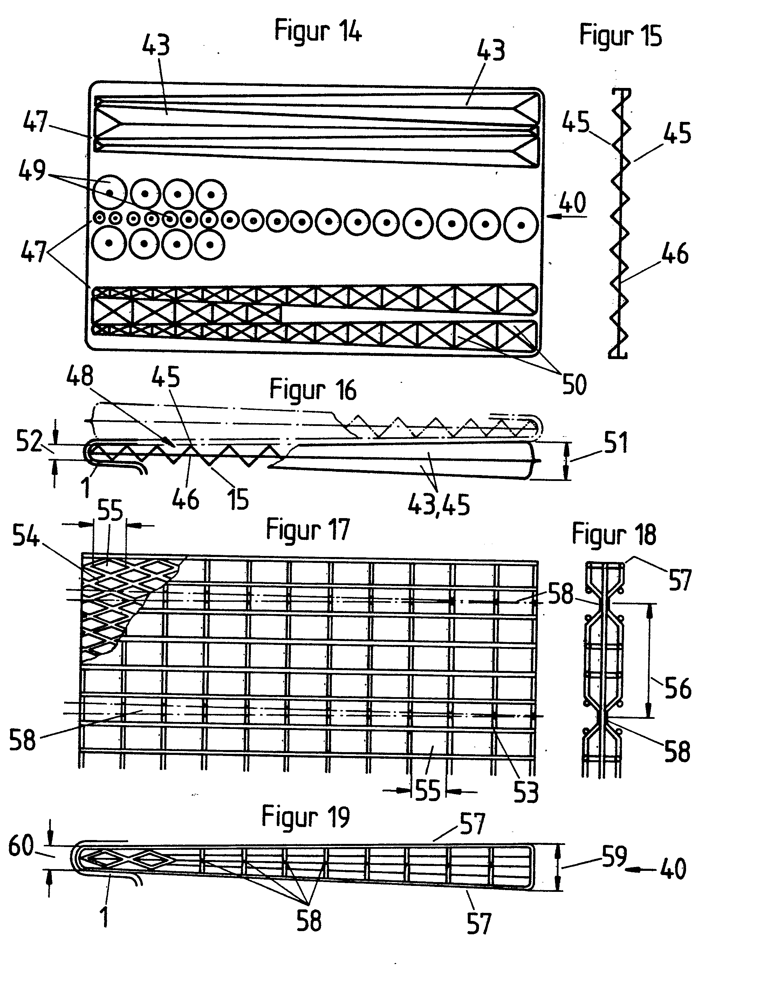

Fig. 14 ist die Vorderansicht eines ebenfalls preßverformten oder tiefgezogenen Abstandshalters für den erfindungsgemäßen Filtereinsatz. Hiermit soll auf die variablen Möglichkeiten von strömungstechnisch günstigen Verformungen einer ziehfähigen Folie aus Alu oder Kunststoff hingewiesen werden. Eingezeichnet sind konisch verlaufende rechts und links von der Folienmitte herausgezogene längsverlaufende Ausbuchtungen oder die wahlweise für die Faltendistanzierung benutzbaren nach beiden Seiten hin wechselseitig ausgepreßten oder herausgezogenen Warzen bzw. eckig strukturierten Pyramidenkästen, um die Filterschicht allseitig auf Abstand zu halten.

Fig. 15 ist eine Seitenansicht der Fig. 14 und zeigt die rechts und links herausgezogenen spitzen Erhebungen und die oberen und unteren Anbiegungen zur Abstandshalterbegrenzung in der Höhe.

Fig. 16 ist eine Draufsicht auf die Variationen der Keilverformung aus einer ziehfähigen Folie mit der eingezeichneten Folienmitte und den zickzackförmigen Filterstoff, der um den Abstandshalter herumgefaltet ist.

Fig. 17 ist die Vorderansicht auf ein dünnes Drahtgitter oder zum Beispiel auf eine Streckmetallfolie mit weiten Maschen und dünnen Stegen, deren Flächen zunächst als Keil angeformt sind, wobei durch Zusammendrücken von Einknickungen an einigen parallel zueinander verlaufenden Streifen in bestimmten Abständen übereinander, gegenseitige keilförmige Flächenabstützung parallel zur Luftströmung verlaufend entsteht.

Fig. 18 zeigt die Seitenansicht der Fig. 17 mit den Einknickungen am beispielsweisen Drahtgitter-Abstandshalter und die gegenseitige Flächenabstützung und gleichzeitige Aussteifung mit den oben und unten geschlossenen Begrenzungsrändern für die Abstandshalterhöhe.

Fig. 19 ist eine Draufsicht auf die Fig. 17 und soll die Keilform am Filterpapier oder Filterstoff veranschaulichen mit der gegenseitigen Flächenabstützung des Drahtgitters oder des Streckmetalls.

Fig. 20 ist die Vorderansicht einer gepreßten oder tiefgezogenen Folie mit rechts und links abwechselnd herausstehenden Rundkegelspitzen, die vom Keilanfang bis zum Keilende hin in ihrer Höhe gleichmäßig kleiner werden und so die Keilform eines Abstandshalters mit einer besonders strömungsgünstigen und luftwiderstandsarmen Gestalt mit wenig Filterabdeckfläche bilden.

Fig. 21 ist eine Seitenansicht der Fig.20 und zeigt deutlich die beidseitig von der Folienmitte aus herausgepreßten oder gezogenen Kegelspitzen mit der zum Ende hin abnehmenden Kegelstruktur.

Fig. 22 ist eine Draufsicht auf die Fig. 20 zum Verständnis der keilförmigen Profilgebung in dieser Ebene.

Fig. 23 zeigt einen kompletten Filtereinsatz in der Seitenansicht mit einer konisch angeordneten von selbst abdichtenden Gitternetzbandage zwecks einer besseren Einführung in den Aufnahmerahmen während des Filterwechsels oder der Filterwartung. Ein Seitenschnitt zeigt gleichzeitig den an allen vier Seiten befindlichen Eckenknick oder eine schräg angedrückte Kante zur Herstellung der konischen Form.

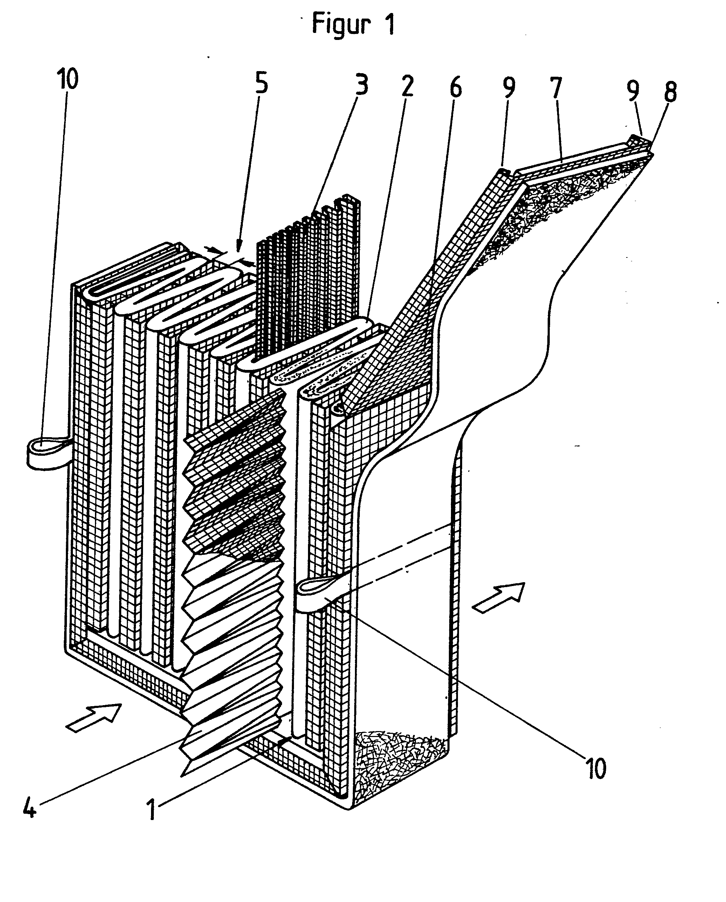

Gemäß Fig. 1 besteht der Filtereinsatz 1 aus einem zickzack gefalteten Papier oder Filterstoff 2, der zunächst durch keilförmige Abstandshalter 3 und 4 separiert wird. Die Abstandshalter in Keilform bestehen entweder aus einem weitmaschigen Drahtgitter, Streckmetallgitter oder wahlweise aus einem Hartpapier oder aus durchbrochener Kunststoffolie oder einem Kunststoffgitter in gewellter Form 3 und 4, die vorzugsweise keilförmig gestaltet sind. Um das straff zickzackförmig gefaltete Filterpaket 5 herum ist eine U-förmige stramm angelegte Kunststoff-, Alu- oder Stahl-Gitternetzbandage 6 angeordnet, die beidseitig mit elastischen und flauschigen Faservliesen oder weichen Vliesstoffen 7 und 8 mittels Sprühkleber beklebt ist. Diese Knickverformbare Gitternetzbandage 6 bildet den äußeren Halt des Filterpaketes 1 und gibt neben der beidseitigen Abdichtungsfunktion zum Faltfilter 1 und zum Aufnahmerahmen 11 die notwendige Stabilität während der Handhabung beim Filterwechsel. Die an den Knickstellen ausgeklinkte Gitternetzbandage 6 ist U-förmig und an den abgebogenen Schenkelenden 9 doppelt auf den ganzen Umfang umgelegt, um eine Versteifung zu erzielen und um Verletzungsgefahren durch das Gitter auszuschließen. An der Gitternetzbandage 6 selbst sind auf zwei gegenüberliegenden Seiten etwas aus der Mitte gegeneinander versetzte fingergerechte Zugschlaufen 10 befestigt, um den Filtereinsatz 1 leicht und schnell aus dem Einbaurahmen 11 herausziehen zu können.

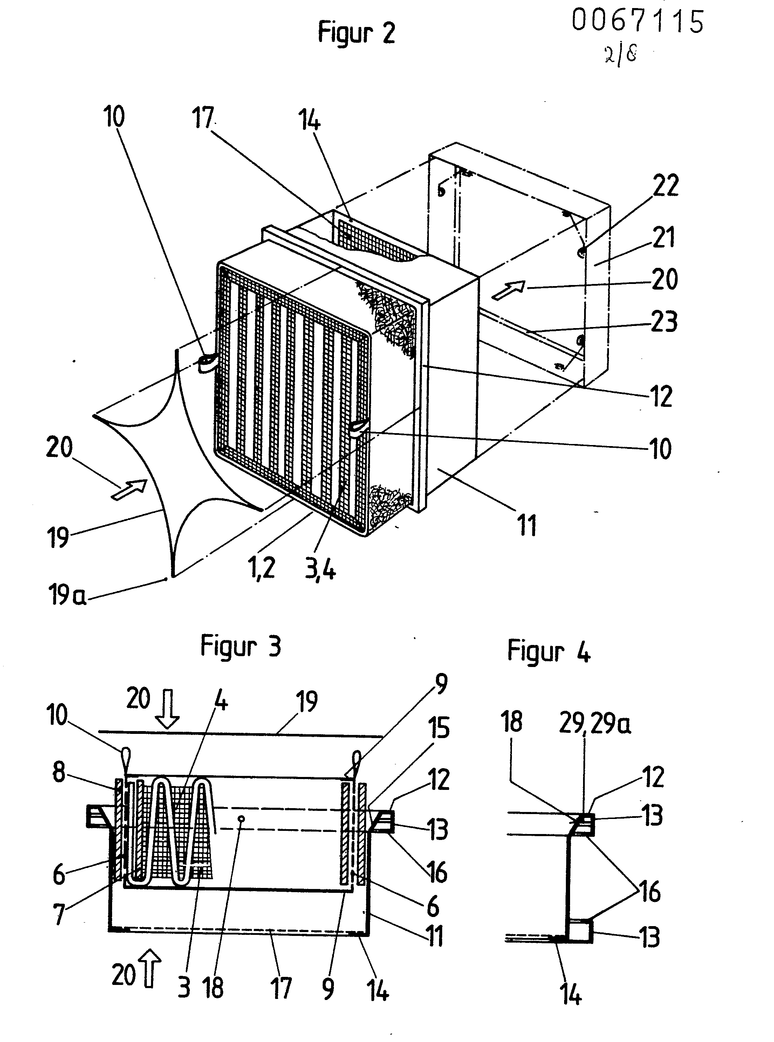

Gemäß Fig. 2 und 3 besteht der aus einem Stück zusammengebogene Aufnahmerahmen 11 vorzugsweise aus 0,4 bis 0,5 mm dicken galvanisch oder sendzimiert verzinktem Stahlblech oder aus einem Zincorblech. An der offenen Seite des Aufnahmerahmens ist eine wahlweise Gleitschräge 15 angebogen, die mit einem ringsumlaufenden U-förmigen Kastenprofil 12 in Verbindung steht, das unterseitig nach innen mit einem kurzen angebogenen Schenkel 16 versehen ist. Die vertikale Kante 13 des Kastenprofils 12 ist 20 bis 25 mm hoch, während die Breite 12 des Profils jeweils abhängig vom Außenmaß ist, das bevorzugt entweder 590 x 590 oder 610 x 610 mm beträgt oder das Maß ein etwa halbierter Rahmen von je einer Länge der Seitenkante des Rahmens ist. In diesem Fall also 610 x 305 mm oder 590 x 285 mm. Die Rahmentiefe ist je nach Ausführung bis zu 400 mm tief.

Am anschließenden langen aufrecht stehenden Rahmenschenkel 11 gemäß Fig. 3 schließt unten ein nach innen eingezogener umlaufender Blechflansch 14 an in einer Breite von 15 bis etwa 20 mm. Hierauf ist ein Drahtgitternetz oder großmaschiges Streckmetallgitter 17 aufgepunktet. Aus der Figur ist weiter ersichtlich, daß der Aufnahmerahmen 11 im Bereich der wahlweisen Gleitschräge 15 am oberen Kastenprofilflansch 12 jeweils an allen vier Seiten jeweils mittig eine Bohrung 18 mit einem eingenieteten Rohr 29 (Fig. 4) aufweist, in die das Klemmkreuz 19 aus Federdraht (Fig. 2) federnd einsetzbar ist, um den Filtereinsatz 1 beidseitig mit dem Luftstrom 20 belastbar zu halten. Gleichzeitig dient das Röhrchen 29a zur Aufnahme von Verbindungsstiften, um die Rahmen miteinander in einer Wandanlage fest zu verbinden.

Die Fig. 2 zeigt einen beispielsweise Sackfilter-Aufnahmerahmen 21 einer Wandanlage mit den Klemmfedern 22, der bei Bedarf mit dem universellen Filtersystem 1 und 11 bestückbar ist. In diesem Falle wird der Aufnahmerahmen 11 mit dem Filtereinsatz 1 durch den Wandeinbaurahmen 21 bis zum Dichtflansch 23 hindurchgesteckt und mit den Klemmfedern 22 am kastenartigen Rahmenflansch 12 festgehalten.

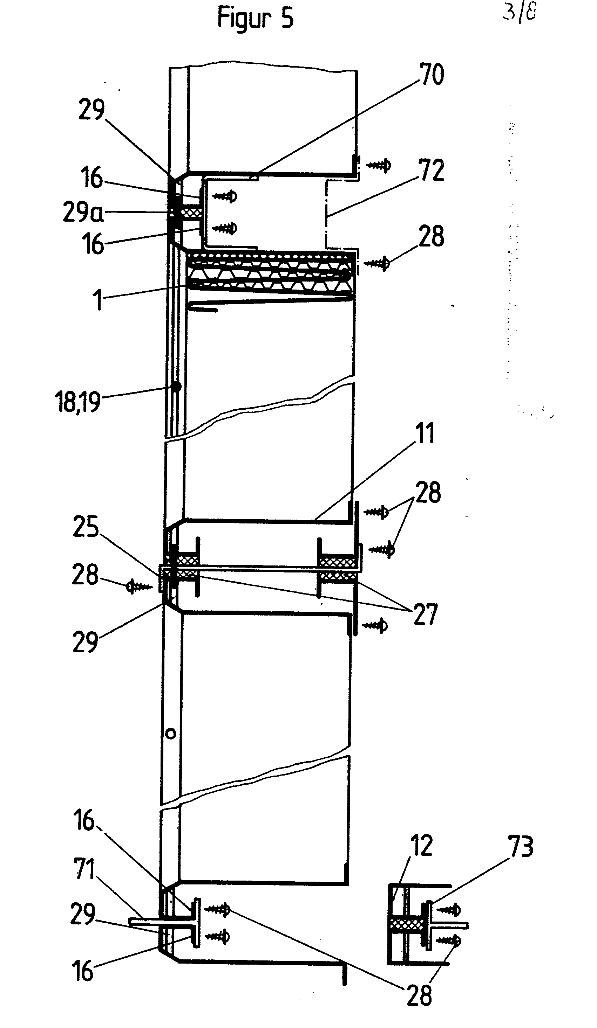

Aus der Fig. 4 ist die Einzelheit am Aufnahmerahmen 11 zu erkennen, wie der untere kastenartige zweite Flansch 13 mit der Abkröpfung 16 am Schenkel 14 des Aufnahmerahmens 11 befestigt wird. Gleichzeitig ist zu sehen, wie von der Bohrung 18 im schrägen Flansch das eingenietete Röhrchen 29a bis zum Außenrand 13 geführt ist. Die Doppelflanschausführung ist als Beispiel gedacht für den direkten Wandeinbau ohne Zusatzrahmen 21, wie in der Fig. 5 gezeigt. Eine solche Anlage kann direkt in ein Wandmauerwerk 24 mit einem umlaufenden T- oder Winkelflanschrahmen 26 eingesetzt werden. Die Aufnahmerahmen 11 mit den eingeschobenen Filtereinsätzen 1 bilden durch einfaches bausteinartiges Über- und Nebeneinanderschichten nach dem Baukastensystem die eigentliche Filterwand, welche durch versetzt angeordnete Halteklammern 25 fixiert oder durch zusätzlich aussteifende Profile in U-, T-Winkel oder Hutprofilformgebung gehalten wird.

In der Fig. 5 sind diese Einzelheiten in einem größeren Maßstab dargestellt. Durch die Halteklammern 25 werden die Aufnahmerahmen 11 gegeneinander lagefixiert. Die Abdichtung der Aufnahmerahmen 11 mit den Filtereinsätzen 1 untereinander geschieht durch elastische Dichtstreifen 6-20 oder 25 mm aus Dichtungskittstreifen oder zum Beispiel aus selbstklebenden Schaumgummibändern 27. Zwischen den Dichtungen sind die Halteklammern 25 angeordnet, die bei Bedarf durch selbstschneidene Schrauben 28 vorn und hinten verschraubt werden können. Hieraus ist auch die Lage der Klemmkreuze 19 und die der Bohrungen 18 zu ersehen. Als Alternative sind als Versteifungen für die Aufnahmerahmen 11 entweder U-Profile 70 oder T-Profile 71 vorgesehen, die mit Schrauben 28 oder mit Nieten an den Flanschabbiegungen 16 befestigt sind. Gegebenenfalls können auch Hutprofile 72 zur Versteifung mit Schrauben 28 verankert werden. Eine andere Version der Versteifung ist ein umgekehrt angeordnetes T-Profil 73 mit den Schrauben 28, was als Zeichnungsausschnitt dargestellt ist. Das Kastenprofil 12 und 13 hat in diesem Fall absichtlich keine Schräge 18.

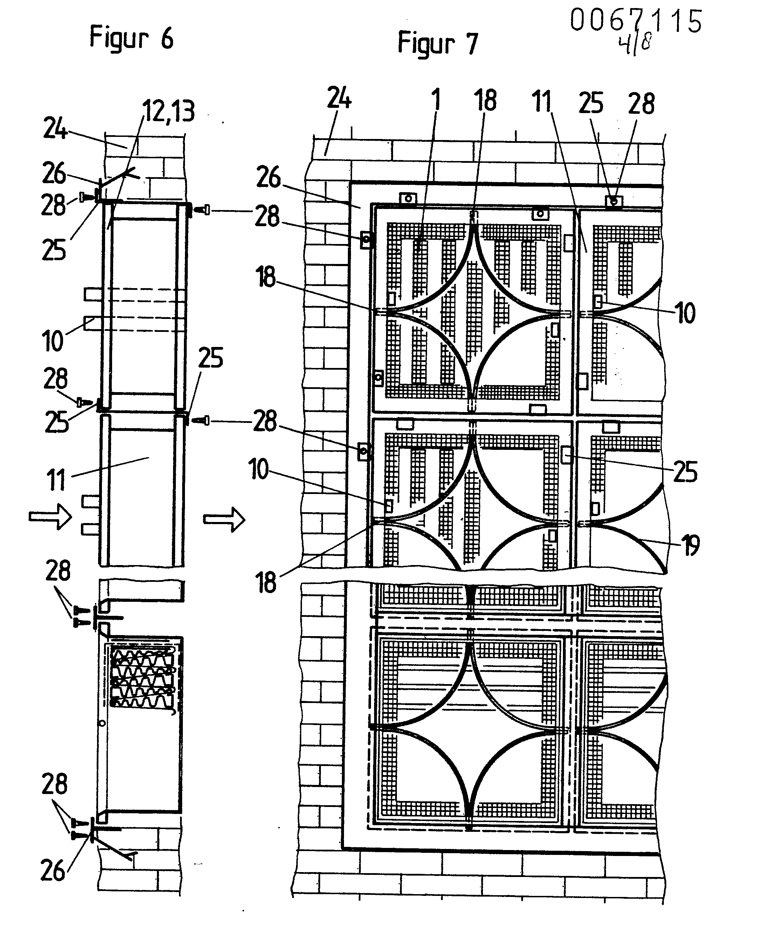

Schließlich ist aus den Fig. 6 und 7 noch eine Seiten- und Vorderansicht einer kompletten Filteranlage in einer Mauerwand 24 mit Winkelflanschrahmen oder mit T-Stahlrahmen 26 zu erstehen. Hieraus ist auch die versetzte Anordnung der wahlweise verwendbaren Halteklammern 25 mit der eventuellen zusätzlichen Verschraubung 28 zu erkennen und die Lage der federnden Klemmkreuze 19 in den einzelnen Aufnahmerahmen 11. Gleichzeitig wird mit diesen Darstellungen anschaulich gezeigt, wie die Versteifungsmaßnahmen gegen den Druck der Luft zum Beispiel mit einem T-Profil 73 durchgeführt werden können, um die gesamte Wandrahmenanlage zu stabilisieren.

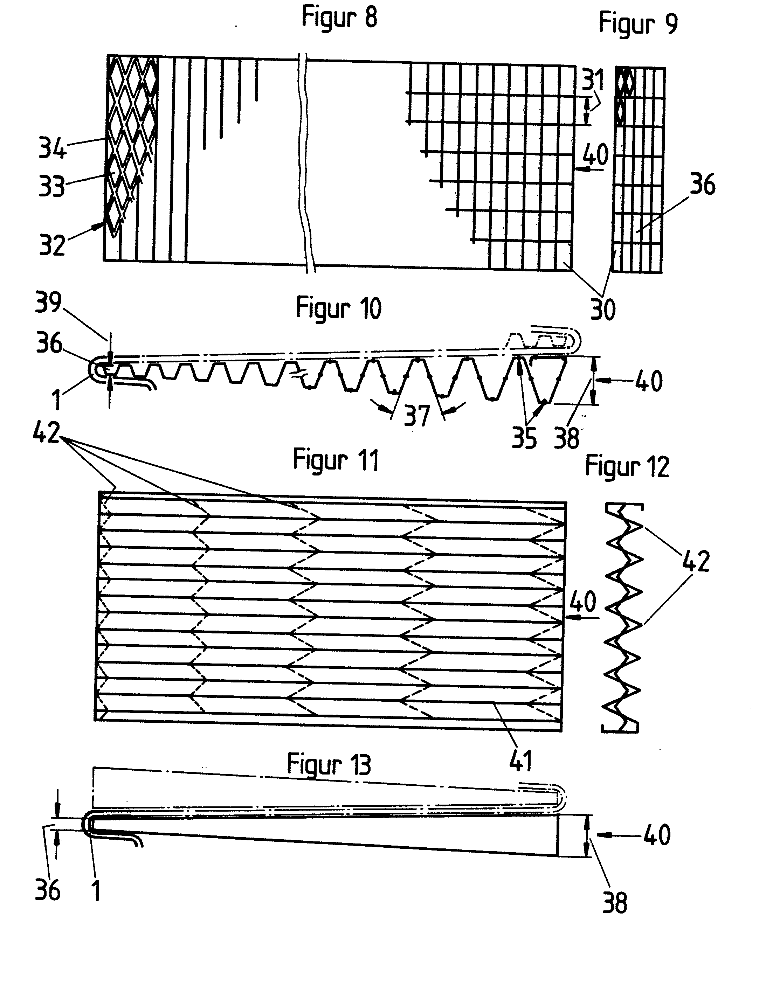

Die Fig. 8 zeigt ein zickzack verformtes keilförmiges das Filterpapier oder den Filterstoff wenig abdeckendes Drahtgitter 30 oder eine ebenso verformte Streckmetallfolie 32 für den Filtereinsatz 1, worin die Maschenweiten 31 oder 33 möglichst groß und deren Drahtdicken oder Stegbreiten 34 oder 35 (Fig. 10) möglichst gering sind, weil diese besondere

BAD ORIGINAL

keilförmige Abstandshalter-Faltung querliegend zur Luftstromrichtung 40 verläuft. Es handelt sich hierbei um einen von der Luft 40 durchströmten Abstandshalter. Vom breiten Keilanfang in der Fig. 10 bis zum Keilende 36 sind die wellenförmigen Faltungen mit in der Höhe allmählich abnehmenden Kanten 35 entweder spitz oder gebrochen und haben einen immer gleichbleibenden Anstellwinkel 37. Die bevorzugt angegebenen Keilbreiten 38 und 39 von etwa 10 bis 20 mm am Keilanfang und etwa 3 bis 6 mm am Keilende 39 haben sich für die verschiedenen Filterpapiere und Filterstoffe oder Faservliese als am günstigsten erwiesen. Die vorausgesetzte Längendimensionierung dieses keilförmigen Abstandshalters zur Distanzierung der Falten der Filtereinsätze 1 liegt bei den zuvor angegebenen Maßangaben für die Keile zwischen $>$ 130 und 380 mm, wobei die Breiten etwa 530 bis 540 mm betragen. Alle Maße sind aber ebenso gut halbierbar und deshalb ziemlich unmaßgeblich für die vorgeschlagene Formgestaltung des luftdurchströmten Faltengitters 31 und 33. Von Wichtigkeit ist lediglich, daß die Knotenpunkte der Querstreben oder Überkreuzungen der Gitter möglichst immer im Faltengrund 35 oder an der Faltenspitze 35 liegen, wie aus der Fig. 10 ersichtlich ist. Die Teilungen der Maschenweiten und die Längen sind dementsprechend gestaltet, um das Filtermaterial 1 gleichmäßig und vor allem steif genug allseitig zu distanzieren.

Die Fig. 11 verdeutlicht einen längs zur Verformungsachse angeströmten gepreßten oder im Vakuum tiefgezogenen keilförmigen Abstandshalter 41 für Filtereinsätze 1 aus Folienmaterial, bestehend aus vollem oder gegebenenfalls durchbrochenem Kunststoff, Aluminium oder tiefziehfähigem Hartpapier oder aus einem dünnen nichtrostenden Metallwerkstoff, bei dem die zickzack gefaltete parallel oder längs zur Luftstromrichtung 40 verlaufende Wellenform vom Keilanfang 38 bis zum schmalen Keilende 36 hin die Zickzackfalten gleichmäßig in der Höhe flacher werden. Während die Falten am Lufteintritt 40 oder am Keilanfang 38 mit einem spitzen Winkel von cirka 120° beginnen, haben die kleineren Keil-Endfalten 36 nur noch etwa eine Winkelstellung von 75° bis 90°. Hierbei erstrecken sich die Faltenhöhen ungefähr von 8 bis 20 mm am Keilanfang und enden am Keilende bei Längen zwischen 130 und 380 mm etwa zwischen 3 und 6 mm je nach Beschaffenheit des Filtermaterials 1 und der Längendimension entsprechend der Fig. 13. Die Fig. 12 zeigt deutlich, wie sich die Faltflanken und Faltenspitzen von vorn nach hinten in ihrer Winkelanstellung und Höhe allmählich flacher werdend verringern.

Die Fig. 14 zeigt einige Beispiele von keilförmig gestalteten Abstandshaltern 43, 47, 49 und 50 aus tiefziehfähigen oder preßfähigen Folienwerkstoff 47 aus Kunststoff, Alufolie oder Metallfolie, Hartpapier oder wasserfester Pappe für den erfindungsgemäßen Filtereinsatz mit verschiedenen strömungs-

BAD ORIGINAL

günstigen und luftwiderstandsarmen Gestaltungsmerkmalen. Diese Abstandshalterfolien 47 bestehen entweder aus durchlaufenden langgezogenen parallel zur Luftströmung 40 versetzt zueinander verlaufenden keilförmigen Ausbuchtungen 43, die gemäß der Fig. 15 rechts und links 45 von der Folienmitte 46 aus abwechselnd spitz hervorstehen und vom Keilanfang zum Keilende hin allmählich abnehmen.

Weitere Varianten in der Fig. 14 sind kreisförmige Ausbuchtungen 49 in Form von hintereinander und versetzt zueinander liegenden Kegelerhebungen, die zum Keilende hin abnehmen oder es handelt sich um Erhebungen in Form von pyramidenförmigen Kästen 50, die in Keilform nach rechts und links abwechselnd aus der Folie herausgezogen sind und sich zum Keilende ebenfalls konisch verkleinern. Die Seitenansicht in der Fig. 15 gibt praktisch die für alle Verformungen zuständigen Konturen 45 von der Folienmittel 46 aus wieder.

In der Fig. 16 als Draufsicht auf die Fig. 14 mit einem Teilausschnitt ist die keilförmige durchgehende Ausbuchtung 43 und 45 und die zickzackförmige Ausbuchtung der Kegel 49 und die der pyramidenförmigen Kästen 50 deutlich dargestellt. Die Maße zwischen den Positionen 51 und 52 sollen die Formgestaltung des Keilabstandshalters 48 wiedergeben mit den aus der Folienmittel 46 beidseitig herausragenden Kegelspitzen 15 für alle kegligen Erhebungen. Der eingezeichnete herumgefaltete Filterstoff 1 an dem Abstandshalter 48 macht deutlich, wie wenig Fläche in beiden Ebenen am Filtermaterial von diesen Distanzseparatorformen abgedeckt werden.

Die Fig. 17 stellt ein rechteckiges keilförmig angebogenes Drahtgitter 53 oder ein glatt gewalztes keilförmiges Streckmetallgitter 54 aus einer dünnen Folie mit Maschenweiten 55 von 25 bis 30 mm und dünnen Drähten oder Stegen bis 1 mm Dicke oder Breite dar. Auch dieser Abstandshalter dient der gleichmäßigen Distanzierung von Filtermaterial des erfindungsgemäßen Filtereinsatzes. Im Abstandsbereich 56 von jeweils 40 bis 60 mm parallel zur Luftströmungsebene 40 und zur waagerechten Ober- und Unterkante der Keilform-Abstandshalter-Kontur befinden sich streifenförmige vom Anfang bis zum Ende des Keiles etwas aufspreizende durchlaufende Einknickungen 58, die die Keilaußenflächen gegenseitig aussteifen und gleichzeitig abstützen, damit diese vom Luftdruck über das gefaltete Filterpapier oder über den Vliesstoff des Filtereinsatzes nicht zusammengedrückt werden können und dann aneinander liegen.

Die Fig. 18 zeigt die abstützenden Einbuchtungen 58 in der Seitenansicht und die Fig. 19 die anzustrebende Keilform 57 mit dem spitzen Ende 60 und dem Keilanfang 59, wobei die Einknickungen 58 nach hinten zum Keilende 60 zu allmählich kleiner werden. Das Filtermaterial 1 wird um diese Abstandshalter herumgefaltet.

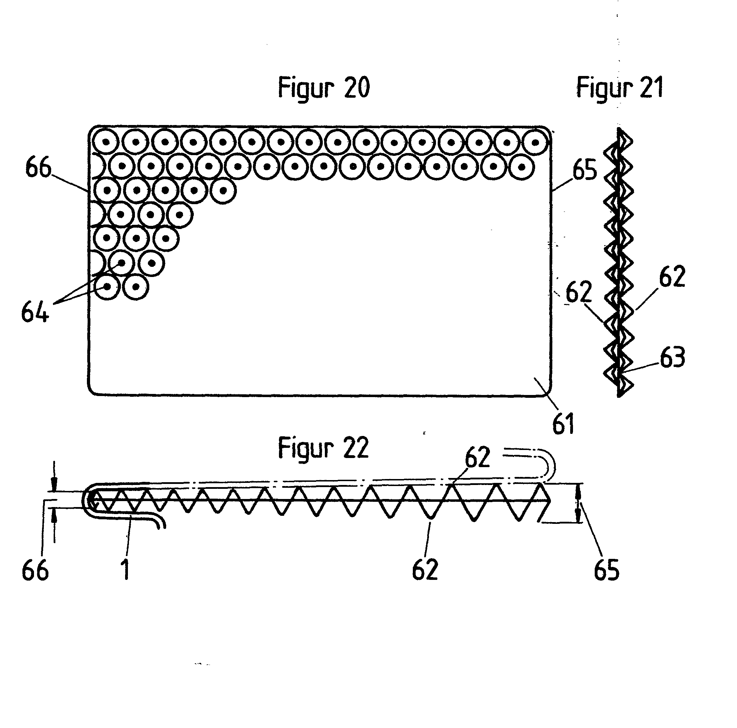

Die Fig. 20 verdeutlicht in der Zeichnung bei Anwendung einer zieh- oder preßfähigen dünnen Folie 61 aus verzinktem dünnen Metall, Aluminium, Hartpapier oder Kunststoff die Möglich - keit einer besonders günstigen Abstandshaltergestaltung mit geringstmöglicher Abdeck- oder Anlagefläche am Filterstoff 1 in Form von wechselseitig herausgezogenen auf Luke gesetzten kreisrunden Warzen oder Kegelspitzen 64. Die Keilform entsteht hierbei dadurch, daß vom Keilanfang 65 bis zum Keilende 66 die Warzen oder Kegelspitzen 64 allmählich in ihrer beidseitigen Höhe von der Folienmitte aus gesehen abnehmen, bis ein ungefähres Maß zwischen 3 oder 6 mm erreicht ist, wenn der Keilanfang 65 zwischen 10 und 20 mm liegt.

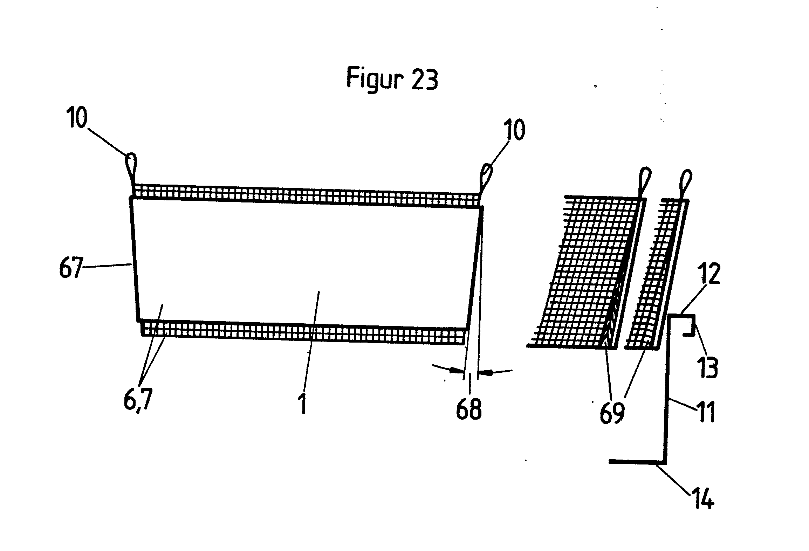

Die Fig. 21 und 22 veranschaulichen in der Seitenansicht und Draufsicht nochmals die herausgestellten Kegelspitzen 62 in beiden Schnittebenen von der Folienmittel 63 aus und deuten die Lage des gefalteten Filtermaterials 1 am Abstandshalter 61 an.

Schließlich ist als Seitenansicht in der Fig. 23 noch der Filtereinsatz 1 mit der Gitternetzbandage 6 und den aufgeklebten Dichtungen 7 und 8 dargestellt, wobei die Bandage 6 und die Dichtungsvliese an den Seiten 67 umlaufend eine konische Form 68 aufweisen. Die schräge Anstellung der Außenkanten 68, von der Zugschlaufenseite 10 her betrachtet, beträgt von dort ausgehend nach unten etwa $1^{o}$ bis $2^{o}$. Hiermit wird eine ohne Dichtungsverlust verbesserte Einführung des Filtereinsatzes 1 in den Aufnahmerahmen 11 mit der Kastenprofilabbiegung 12 und dem eingezogenen Auflagenflansch 14 erzielt. Durch eine unterhalb der Bandage angeordnete konische Umfalzung oder Einknickung 69 des Gitternetzes an allen vier Ecken wird beim Zusammenbiegen der U-förmigen Gitternetzbandage 6 zu einer rahmenähnlichen Halterung des Filtereinsatzes 1 die gewünschte Konizität erzielt.

Die Funktion dieses Filtersystems und seine Vorteile werden wie folgt beschrieben:

Zunächst wird der komplette harte Filtereinsatz mit der elastischen konisch angeordneten Dichtungsbandage in die offene Seite des Aufnahmerahmens eingeschoben. Dabei begünstigt die wahlweise Anordnung einer Gleitschräge am Rahmenvorderteil noch zusätzlich das Einsetzen des Filtereinsatzes in den Aufnahmerahmen. Der dabei erforderliche Einschubdruck auf das Filterpaket wird mit beiden Händen auf die mit Gitternetz abgedeckten Seitenränder ausgeübt. Dabei drückt sich das 5 bis 10 mm dicke und abdichtende angeklebte Außenvlies an der Gitternetzbandage etwas zusammen und federt nach erfolgtem Einschub des Filtereinsatzes im Aufnahmerahmen so stark wieder auseinander, daß der Filtereinsatz selbsthemmend und abgedichtet im Rahmen fest eingeklemmt ist. Danach wird das Klemmkreuz federnd in die Rahmen wieder eingerastet und sichert so den Filtereinsatz gegen Verschub ab. Hierdurch wird auch eine reversible Beaufschlagung des Filtereinsatzes mit der Staubluft möglich.

Da der Aufnahmerahmen mit dem eingesetzten Filterpaket oder Filtereinsatz gleichzeitig als selbstarretierender und selbstabdichtender Wandeinbaurahmen in Form eines Baukastens für die Wandbildung benutzt werden kann, entfällt als gravierendste Einsparung ein zusätzlicher Wandeinbaurahmen mit den hierfür erforderlichen Verschraubungen, Spann- oder Klemmeinrichtungen zur Anpressung und Abdichtung des Filters. Das ist ein bedeutsamer Kostenvorteil.

Andererseits kann der komplett mit dem Filtereinsatz bestückte Aufnahmerahmen in einem vorhandenen Wandeinbaurahmen, der bisher beispielsweise für Mehr-Taschen oder großvolumige Sackfilter benutzt wurde, als besserer Ersatz auch mit dem erfindungsgemäßen Filtersystem bestückt werden. Der Aufnahmerahmen mit dem Filtereinsatz wird einfach durch den Wandeinbaurahmen hindurchgesteckt und am einseitigen Flanschvorsprung mit den vorhandenen Spannvorrichtungen angepreßt. Diese Flexibilität in der Anwendung für bereits bestehende Anlagen ist ein weiterer Vorteil.

Weiterhin bestehen die Vorteile darin, daß das, was nach der Staubsättigung als verbrauchter Filtereinsatz noch weggeworfen wird und nur noch bedingt verwertbar wäre, tatsächlich nur noch Müll ist. Die im Filtereinsatz verarbeitenden Materialien, mit Ausnahme des Filterstoffes, machen den kleineren Teil des Anschaffungswertes des gesamten Filtersystems aus. Deshalb ist dieses Wegwerffilter als Müll nicht mehr so stark kostenbelastet. Ein weiterer Vorteil besteht noch darin, daß der gesättigte Filtereinsatz auf mehr als ein Viertel seines ursprünglichen Volumens für die Müllabfuhr verdichtbar ist, weil alle darin enthaltenen Teile sich durch relativ geringe Drucke leicht verbiegen, stauchen oder zusammenquetschen lassen. Als Vorteil wird weiterhin gewertet, daß der Filtereinsatz mit dem Aufnahmerahmen eine beidseitige Beaufschlagbarkeit des erfindungsgemäßen Filtersystems ohne Qualitätsverlust zuläßt. Schließlich verbleibt als ein weiterer Vorteil noch die leichte und beschädigungslose Schnellauswechselbarkeit gegen ein frisches Filter ohne Aufnahmerahmenwechsel auch durch Nichtfachleute, wenn der im Betrieb befindliche Filtereinsatz durch Erschöpfung seine Leistung verloren hat. Ähnliche Vorteile am erfindungsgemäßen Filtereinsatz bieten weiterhin die vorgeschlagenen diversen Abstandshalter aus Drahtgitter, Streckmetallgitter oder aus Folienmaterial mit geringer Filterflächenabdeckung. Beispiele aus der bisherigen Praxis mit gewöhnlichen Abstandshaltern, deren Zickzackform zur Ein- und Ausströmseite zeigt, haben zur Genüge bewiesen, daß die Abdeckungen der spezifischen Filterfläche durch die linienförmigen Berührungen der Spitzen zickzackförmig gefalteter Alu- oder Kunststoffolien-Abstandshalter relativ groß sind. Bei einem der bekannten Schwebstofffilterelemente beträgt der Flächenverlust mehr als 20 %. Je weicher der Filterstoff ist, um so mehr dringen die dreieckig geformten Wellungen der Kunststoff- oder Alufolien in das Filtermaterial ein und erhöhen so den Abdeckverlust von sonst

BAD ORIGINAL

ausnutzbarer wirksamer Filterfläche oft bis zu 25 %. Bei gewellten Abstandshaltern ohne Spitzen ist der Filterflächenverlust noch größer. Dieser kostenaufwendige Mangel ist mit den vorgeschlagenen Abstandshaltern am erfindungsgemäßen Filtereinsatz dadurch verringert, indem die Anzahl der Berührungspunkte der Abstandshalter am Filterpapier oder am Filterstoff erheblich reduziert wurde, ohne dabei die Distanzierungs- oder Stützfunktionen zu beeinträchtigen. Der hierdurch entstehende Flächenverlust am Filtermaterial beträgt je nach Formgebung des Abstandshalters und seiner Struktur allenfalls 0,8 bis 2,5 %, womit etwa nur ein Zehntel von dem abgedeckt wird, was bisher allgemein üblich war. Die Kosteneinsparung hierdurch ist beträchtlich selbst gegenüber den fadenartigen oder streifenförmigen Abstandshaltern mit Abdeckflächen bis zu 6 und 8 %. Die kompakte Bauform begünstigt darüber hinaus den Einbau in Kanäle, Klimakästen und Klimageräteanlagen und hat keine raumgreifenden Außenmaße wie bisherige Filtersysteme mit gleichen Filterflächen, Wirkungsgraden und Entstaubungsleistungen. Die etwas schräg angestellte äußere Formgebung des Filtereinsatzes begünstigt darüber hinaus das Einsetzen und Entnehmen aus dem Filterrahmen während des Austauschvorganges und erfordert aus diesem Grunde keine besonderen Druck- oder Zugkräfte des Wartungspersonals oder zusätzliche Belastungen des Rahmensystems. Alle aufgezählten Vorteile sind mit vergleichbar bekannten oder ähnlichen Filtersystemen in der gleichen platz- und kostensparenden Weise bisher nicht erzielt worden.

0067115

Patentansprüche

1. Selbstabdichtende, auswechselbare, großflächige Kompaktfiltereinsätze passend zu einseitig oder beidseitig mit Flanschabbiegungen versehene Aufnahmerahmen zum unmittelbaren Einbau in Wände, Decken oder Gehäuse oder zum wahlweisen Einbau in vorhandene Einbaurahmen mit Anpreßvorrichtungen, dadurch gekennzeichnet, daß der für den erfindungsgemäßen Filtereinsatz (1) passende vorderseitig offene und rückseitig mit einem nach innen gebogenen 15 bis 20 mm breiten Flansch (9) und mit einem als Stütze dienenden Gitternetz (17) abgedeckte Filteraufnahmerahmen (11), wahlweise mit ein- oder beidseitigen nach außen angeordneten kastenartigen oder U-förmigen Flanschabbiegungen (12,13) versehen ist, wodurch dieser gleichzeitig als selbstarretierender Wand-, Decken- oder Gehäuseeinbaurahmen (11) so ausgebildet ist, daß ein austauschbarer mit zwei Zugschlaufen (10) versehener paketartig vorbereiteter nicht flexibler großflächiger beidseitig gefalteter keilförmig distanzierter Filtereinsatz (1) darin elastisch eingebettet werden kann mittels einer außen um den Filtereinsatz (1) herum umlaufenden stramm angelegten U-förmigen (9) Gitternetzbandage (6), die beidseitig mit einem nachgiebigen flauschigen Faservliesstoff (7,8) beklebt ist und womit der Filtereinsatz (1) in den Aufnahmerahmen (11) gleitend einschiebbar und gleichzeitig luftabdichtend fixierbar ist und von einem Klemm- oder biegsamen Federdrahtkreuz (19) in dieser Arbeitslage bedarfsweise beidseitig mit dem Luftstrom (20) beaufschlagbar, gehalten wird.

2. Selbstabdichtende, auswechselbare, großflächige Kompaktfiltereinsätze nach Anspruch 1, dadurch gekennzeichnet, daß der außen flexibel und selbstabdichtend bandagierte Filtereinsatz (1) aus zickzack gefalteten flauschig weichen Vliesstoffen oder aus feinfaserigen Hartvliesen (2) besteht, die wahlweise aus Naturfaser-, Kunststoff- oder Glasfasergemischen gebildet sind, während die einzelnen Filterfalten mit abwechselnd beidseitig eingeschobenen keilförmigen sich gegenseitig abstützenden Abstandshaltern (3,4) versehen sind, die wahlweise aus einen steifen zickzack verformten Maschendraht oder aus stabilisierten Streckmetallkeilen (3), gegebenenfalls aber auch aus einem dünnen harten stark durchbrochenen Aluminiummaterial oder Kunststoff (4) bestehen, die eine gewellte oder eine andere gegenseitig sich abstützende Keilform haben, welche mit einem Abmaß auf einer Seite (5) und auf der anderen schmalen Seite von 3,0 bis 5 mm versehen sind, wobei deren wahlweise Längen jeweils zwischen 130 und 360 mm liegen.

3. Selbstabdichtende, auswechselbare, großflächige Kompaktfiltereinsätze nach Anspruch 1 und 2, dadurch gekennzeichnet, daß die flexible Gitternetzbandage (6) zur umlaufenden und nach innen und außen abdichtende Einfassung des Filtereinsatzes (1) wahlweise aus einem Metallgewebe, Streckmetall- oder Drahtgitter oder aus einem anderen stark durchbrochenen hart verformten Kunststoffstreifen besteht, der beidseitig etwa 5 bis 6 mm doppelt gefalzt oder um 180° umgelegt (9) und U-förmig so ausgeformt ist, daß die den Filtereinsatz von (1 bis 2) staub- und reinluftseitig übergreifenden abgebogenen rechtwinkligen Ränder (9) beidseitig etwa ein Maß von 25 bis 50 mm aufweisen, während der lange gerade Schenkel mit den hierauf beidseitig aufgeklebten flauschigen Faservliesen (7,8) die Höhe des jeweiligen wahlweisen Filtereinsatzes (1) von 130 bis 150 mm oder von 260 bis 360 mm möglichst nicht überschreitet.

4. Selbstabdichtende, auswechselbare, großflächige Kompaktfiltereinsätze nach Anspruch 1 bis 3, dadurch gekennzeichnet, daß der zickzackförmig gefaltete und durch stark luftdurchlässige Keile (3,4) distanzierte Filtereinsatz (1,2) je nach Wahl entweder die Höhenabmaße von 80 bis 150 mm oder von $>$270 bis 450 mm besitzt bei einem wahlweisen quadratischen Außenmaß von 530 bis 550 mm oder von 260 bis 275 mm x 530 bis 550 mm, wobei unmittelbar an der elastischen Gitternetzbandage (6) mindestens an je zwei Seiten des Filtereinsatzes (1) etwa 20 mm breite textile Zugschlaufen (10) etwas aus der Mitte versetzt für den Fingergriff angeordnet sind.

5. Selbstabdichtende, auswechselbare, großfächige Kompaktfiltereinsätze nach Anspruch 1 bis 4, dadurch gekennzeichnet, daß der Aufnahmerahmen (11) für den Filtereinsatz (1,2) an der offenen Einschubseite einen doppelt nach außen angebogenen U-förmigen, nach innen mit einer Gleit- oder Führungsschräge (15) versehenen kastenartigen Flanschansatz (12) von 20 bis 25 mm Höhe und einer Breite von 20 bis 38 mm aufweist, wobei der an der unteren Rahmenseite nach innen rechtwinklig angebogene Flanschrand (14) die Dichtungsanlage für den eingeschobenen Filtereinsatz (1,2) darstellt, während der übrigbleibende Zwischenraum der Rahmenöffnung mit einem weitmaschigen Drahtgitternetz oder Streckmetallgitter (17) stationär damit ausgefüllt oder abgedeckt ist.

6. Selbstabdichtende, auswechselbare, großflächige Kompaktfiltereinsätze nach Anspruch 1 bis 5, dadurch gekennzeichnet, daß der Filtereinsatz-Aufnahmerahmen (11) ein quadratisches vorzugsweises Innenmaß von 530 bis 550 mm oder ein rechteckiges Maß von 260 bis 275 x 530 bis 550 mm aufweist, wobei das obere oder untere Flanschaußenmaß (12,13) bevorzugt entweder 610 x 610 mm oder 590 x 590 mm oder 285 bis 305 x 590 bis 610 mm ist, während die Einbaurahmentiefen in den Maßen etwa zwischen 150 und 450 mm liegen.

7. Selbstabdichtende, auswechselbare, großflächige Kompaktfiltereinsätze nach Anspruch 1 bis 6, dadurch gekennzeichnet, daß der ober- und unterseitig mit je einer kastenartigen Flanschabbiegung versehene Aufnahmerahmen (11) jeweils am unteren Flansch (14), der 12 bis 15 mm breit nach innen gebogen ist, das U-förmige Kastenprofil (13) dadurch erhält, indem dieses darauf wahlweise aufgepunktet oder fest aufgenietet ist.

8. Selbstabdichtende, auswechselbare, großflächige Kompaktfiltereinsätze nach Anspruch 1 bis 7, dadurch gekennzeichnet, daß der obere aus einem Stück angebogene nach innen abgeschrägte U-förmige Kastenflansch (12) jeweils in der Mitte des Rahmens und der Schräge an allen vier Rahmenseiten (11) jeweils eine Bohrung (18) aufweist, die über Steckbuchsen (29) mit dem äußeren Flanschrand (13) dichtend jeweils in Verbindung stehen und zur Aufnahme eines vierteiligen klemmwirksamen Federdrahtkreuzes (19) aus 5 bis 7 mm starken Draht dienen, welches aus zur Mitte hin etwas nach innen durchgewölbten Drahtbügeln (19) gebildet wird, die jeweils an ihren Enden (19a) fest miteinander verbunden sind, während die Steckbuchsen (29) im Rahmen (11) gleichzeitig zwecks einer festen Rahmenverbindung untereinander zum Beispiel mit Kerbnägeln oder Zylinderstiften (29a) dauerhaft verstiftet werden können.

9. Selbstabdichtende, auswechselbare, großflächige Kompaktfiltereinsätze nach Anspruch 1 bis 8, dadurch gekennzeichnet, daß insbesondere die mit den kastenartigen Doppelflansch (12,13) versehenen Aufnahmerahmen (11) und die darin eingelegten Filtereinsätze (1,2) zum Beispiel in den Außenmaßen 610 x 610 mm oder 610 x 305 mm zwecks Bildung einer von beiden Seiten beaufschlagten Wandfilteranlage (24) nach baukastensystemartiger Über- und Nebeneinanderschichtung der Einbaurahmen (11) zum Beispiel mit elastischen selbstklebenden Schaumstoffbanddichtungsstreifen 6x25 mm (27) jeweils in den umlaufenden Flanschbereichen (12,13) abgedichtet und von je zwei abwechselnd spiegelbildlich angeordneten ZET-förmigen Halte- bzw. Blechklammern (25) an jeder Rahmenseite (11) gegeneinander gehalten werden, wobei gegebenenfalls eine zusätzliche Verschraubung mit Schneidschrauben (28) gegen die Rahmenflanschen (12,13) und den umlaufenden Winkelflansch oder T-Stahlflansch (26) über die Halteklammern (25) diese Schnappverbindung noch unterstützt, während Zusatzaussteifungen bestehend aus U-Profilen bzw. T-Profilen (70,71,73) oder Hutprofilen (72) die einseitig mit kastenprofilartigem Flansch (12,13) ausgestatteten Aufnahmerahmen (11) außerdem noch stabilisieren.

10. Selbstabdichtende, auswechselbare, großflächige Kompaktfiltereinsätze nach Anspruch 1 bis 9, dadurch gekennzeichnet, daß der erfindungsgemäße Filtereinsatz (1,2) wahlweise sowohl aus scharf gefaltetem schwerentflammbaren Filterpapier, Faservliesen, Schaumstoff, feinfaseriger Watte, Filz oder aus trockener oder mit Staubbindemittel benetzter Faserwolle in Höhen von 130 bis 460 mm hergestellt ist, deren Faltenzwischenräume (5) zwischen 8 und 16 mm liegen und wobei die staubabscheidenden Filteroberflächen (1) im Speicher- und Niederschlagsbereich groß und in den Porenöffnungen möglichst gering sind, wobei die Elementarfasern dieser Filterstoffe (1,2) vorzugsweise eine gewendelte oder multifile Faserstruktur mit geringer Faserdicke und Stapellängen vorzugsweise größer als 3 mm aufweisen, die mit geringem Bindemittelanteil in mehreren Schichten über- oder miteinander regellos vernetzt sind und dabei die diversen Schichtdicken von $<$4,5 bis 12 mm nicht überschreiten, wobei die zickzackartig gefalteten Flächen vorzugsweise zwischen 6 und 10 Quadratmetern und bei den papierartigen dünneren Filtermaterialien von 1 bis 2,5 mm Dicke die Flächen zwischen 15 und 18 Quadratmetern pro Filtereinsatz liegen.

11. Selbstabdichtende, auswechselbare, großflächige Kompaktfiltereinsätze nach Anspruch 1 bis 10, dadurch gekennzeichnet, daß quer zur Luftstromrichtung (40) zickzackartig geformte Abstandshalterkeile für gefaltete Filtereinsätze (1) angewendet werden, die aus einem 0,5 bis 0,7 mm dicken geschweißten Zinkdrahtgitter (30) bestehen, deren Maschenweiten ~ 12,5 x 25 mm oder ~ 30 x 30 mm groß sind oder aus 0,3 bis 0,5 mm dicker Streckmetallfolie (32) bestehen, deren Maschenweiten und Maschenlängen (33) zwischen 15 und 30 mm bei einer Stegbreite (34) von 1 mm liegen und deren zickzackförmige Wellungen mit scharfen oder gebrochenen Kanten (35) sich zum Keilende (36) hin unter Beibehaltung gleichbleibender Anstellwinkel (37) allmählich von 10 oder 20 mm (38) ausgehend auf 3 bis 6 mm (39) konisch verkleinern, wobei unabhängig von der Keilbreite die Keillängen jeweils zwischen 270 und 380 mm oder zwischen 130 und 265 mm liegen.

12. Selbstabdichtende, auswechselbare, großflächige Komptaktfiltereinsätze nach Anspruch 1 bis 11, dadurch gekennzeichnet, daß verschiedenartig ausgebildete längs zur Verformungsachse angeströmte (40) Abstandshalter für gefaltete Filtereinsätze (1) angewendet werden, die wahlweise aus tiefgezogenen hitzebeständigen Kunststoffolien oder aus hartem Tiefziehwerkstoff bzw. Alufolien (41) bestehen, die eine allmählich abflachende (38 zu 36) keilartig ausgebildete zickzackförmige Wellenform (42) haben oder spitz auslaufende pyramiden- (43) oder kreisförmige (44) Ausbuchtungen aufweisen, die rechts oder links (45) von der Folienmitte (46) aus jeweils abwechselnd herausgezogen sind und zum Abstandshalterende (47) hin in der Höhe entweder parallel zur welligen Keilform (48) längs verlaufend flacher werden oder sich als einzeln ausgebildete Warzen (49) oder Pyramidenkästen (50) von 10 bis 20 mm (51) auf 3 bis 6 mm (52) allmählich auf beiden Seiten zum Keilende (52) hin verkleinern.

13. Selbstabdichtende, auswechselbare, großflächige Kompaktfiltereinsätze nach Anspruch 1 bis 12, dadurch gekennzeichnet, daß ein Alugitter oder ein verzinktes rechteckiges Drahtgitter (53) oder eine verzinkte bzw. verzinnte Streckmetallgitterfolie (54) mit Maschen zwischen 15 und 30 mm (55) zur Abstandshalterung von gefalteten Filtereinsätzen (1) so ausgebildet ist, daß jeweils in Abständen zwischen 40 und 60 mm (56) parallel zur Ober- und Unterkante der Keilformkontur (57) streifenförmig verlaufende Einknickungen (58) zur gegenseitigen Abstützung eingearbeitet sind, die sich von 10 oder 20 mm (59) ausgehend auf 3 bis 6 mm zum Keilende (60) hin gleichmäßig verkleinern.

BAD ORIGINAL

14. Selbstabdichtende, auswechselbare, großflächige Kompaktfiltereinsätze nach Anspruch 1 bis 13, dadurch gekennzeichnet, daß Abstandshalter (3,4) für gefaltete Filtereinsätze (1) aus einer dünnen tiefziehbaren harten Folie (61) hergestellt sind, bei der versetzt zueinander angeordnete abwechselnd rechts und links (62) von der Folienmitte (63) aus vorstehende kreisrunde Kegelspitzen (64) mit gleichbleibenden Durchmessern herausgezogen sind, die sich in Keilform zum Ende hin beidseitig von 10 oder 20 mm (65) ausgehend auf 3 bis 6 mm (66) gleichmäßig verkleinern.

15. Selbstabdichtende, auswechselbare, großflächige Kompaktfiltereinsätze nach Anspruch 1 bis 14, dadurch gekennzeichnet, daß die Filtereinsätze (1) zur besseren Rahmeneinführung außen etwas konisch (67) gehalten sind, wobei die allseitig umlaufende Schrägstellung (68) der Gitternetzbandage mit den Dichtungen von der Zugschlaufenseite (10) her $< 1^{\circ}$ bis $2^{\circ}$ nicht überschreitet, was durch etwas nach innen eingeknickte oder konisch umgefalzte Ecken (69) am Gitternetz (6) mit den Dichtungen 7,8) erreicht wird.

0067115
1/8

Figur 1

10
5
3
2
6
9
7
9
8
10
4
1

Figur 2

10
17
14
22
21
20
23
12
10
20
19
19a
1,2
3,4
11

Figur 3

20
10
4
19
9
15
8
12
13
6
16
7
6
11
20
3
18
17
9
14

Figur 4

18
29,29a
12
13
16
13
14

0067115

3/8

Figur 5


70
29
16
72
29a
16
28
1
18,19
11
28
25
28
27
29
16
12
73
71
29
16
28

0067115
4/8
Figur 6
Figur 7
24
12,13
26
28
25
10
11
1
18
19

Figur 8
Figur 9
31
34
33
32
40
36
30
Figur 10
39
36
1
40
37
35
38
42
Figur 11
Figur 12
42
40
41
Figur 13
40
36
1
38

Figur 14
Figur 15
43
43
47
49
40
47
50
45
45
46
Figur 16
48
45
52
51
1
46
15
43,45
Figur 17
55
54
Figur 18
57
58
56
58
58
55
53
Figur 19
57
60
59
40
1
58
57

Figur 20
Figur 21
66
65
64
62
62
63
61
Figur 22
62
66
1
62
65

Figur 23

10
10
67
12
13
6,7
1
68
69
11
14

0067115

Nummer der Anmeldung

Europäisches Patentamt

# EUROPÄISCHER RECHERCHENBERICHT

EP 82 73 0033.6

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| D,A | DE - A - 1 507 784 (CEAG)<br>* Fig. 1 *<br>-- | |
| D,A | DE - A - 2 141 777 (LUWA)<br>* Fig. 2 *<br>-- | |
| D,A | US - A - 3 258 900 (J.D. HARMS)<br>* Fig. 1, 2 *<br>-- | |
| A | DE - A - 1 951 184 (DELBAG-LUFTFILTER)<br>* Fig. 1 *<br>-- | |
| A | DE - A - 2 225 170 (DONALDSON CO.)<br>* Anspruch 1 *<br>-- | |
| A | DE - A - 2 300 271 (DRÄGERWERK)<br>* Fig. 1 *<br>-- | |
| A | DE - A - 2 327 727 (B. MAILLAN)<br>* Fig. 1 *<br>-- | |
| A | DE - U - 1 934 869 (CEAG)<br>* Anspruch 1 *<br>-- | |
| A | US - A - 2 907 408 (P.M. ENGLE et al.)<br>* Fig. 1 bis 4 *<br>-- | |
| A | US - A - 3 019 854 (W.A. O'BRYANT)<br>* Fig. 1 bis 6 *<br>---- | |

KLASSIFIKATION DER ANMELDUNG (Int. Cl.³)

B 01 D 46/52

RECHERCHIERTE SACHGEBIETE (Int. Cl.³)

B 01 D 46/10
B 01 D 46/42
B 01 D 46/52

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 21-05-1982 | KÜHN |